# EUROPEAN PATENT APPLICATION

(11) **EP 2 579 447 A2**
(43) Date of publication of application: **10.04.2013**
(21) Application number: 12187337.6
(22) Date of filing: 05.10.2012
(51) Int. Cl.: H02P 6/00

(54) **Control device and control method of alternating current motor**

(30) Priority: 07.10.2011 JP 2011223463
(71) Applicant: AISIN SEIKI KABUSHIKI KAISHA, Kariya-shi, Aichi 448-8650 (JP)
(72) Inventor: Hirose, Shota, Kariya-shi, Aichi 448-8650 (JP)
(74) Representative: TBK

(57) **Abstract**

A control device (1, 10) of an alternating current motor (9) includes a voltage phase setting portion (12, 120), an offset detecting portion (11), a switching controlling portion (13) obtaining a timing at which a voltage waveform is switched between a pulse width modulation waveform and a square waveform per half cycle of an electric angle, and a waveform switching portion (15) switching the voltage waveform to the pulse width modulation waveform on a positive side and the square waveform on a negative side in a case where the offset value (IUO, IVO, IWO) is a positive value, switching the voltage waveform to the pulse width modulation waveform on the negative side and the square waveform on the positive side in a case where the offset value is a negative value, and switching the voltage waveform to the square waveform on the positive side and the square waveform on the negative side in a case where the offset value is zero.

## Description

### TECHNICAL FIELD

This disclosure generally relates to a control device and a control method of an alternating current motor.

### BACKGROUND DISCUSSION

A driving device of an alternating current motor (which will be hereinafter referred to as an AC motor) has been recently provided with an inverter to thereby greatly improve a control performance of the driving device as compared to a driving device not equipped with the inverter. According to the control of the driving device including the inverter, an electric current flowing through an armature coil for each of three phases of a stator and a rotation phase of a rotor are detected. In addition, a phase of a square-waveform voltage is controlled on a basis of a torque command value from an outside of the driving device, and a voltage effective value is controlled by a pulse width modulation method (PWM method) so as to adjust an output torque of the AC motor. Further, an offset such as a direct-current component, for example, superimposed on the electric current (i.e., a current offset) may be detected and reduced. For example, a technique to detect the current offset is disclosed in JP08-149882A (which will be hereinafter referred to as Reference 1).

A control device of a motor disclosed in Reference 1 includes an inverter portion outputting a drive current, a current value detecting means detecting a value of the drive current, an offset value determining means, and a signal processing portion. The offset value determining means detects an offset value of a direct-current level from a current value detection signal in a state where the drive current is not supplied to the motor. The signal processing portion generates a control signal obtained by subtracting the offset value from the current value detection signal. Accordingly, a specific adjustment circuit for adjusting the offset value is not required, which leads to a downsizing and a simplification of the control device. Further, the rotation control of the motor may be highly accurately performed.

According to the control device disclosed in Reference 1, the current offset (the offset value) is detected in a non-driving state where the drive current is not supplied to the motor. Thus, a zero error of the current value detecting means is detected and corrected. Nevertheless, the current offset is not limited to an imaginary value caused by a detection error and may be actually generated by the direct-current component superimposed on the current when the motor is driven. In addition, the current offset may be generated depending on an operation condition of the motor. For example, in a case where characteristics of power cables vary among the three phases, the current offset is generated only when the current flows. Further, in a case where the detection error exists in the rotation phase of the rotor, the current offset may change depending on the magnitude of the detection error or positive and negative of the current waveform. As a result, the control device of Reference 1 is inhibited from detecting the actual current offset that occurs in the operating state of the motor or the change of the current offset.

Furthermore, according to a control device controlling a phase of a square-waveform voltage based on a torque command value, the square wave is switched between a positive side and a negative side per 180 degrees of an electric angle. In this case, however, the aforementioned control device does not include a function to variably control the voltage amplitude on the positive side or the negative side. Therefore, even when the current offset occurs, such current offset may not be removed.

A need thus exists for a control device and a control method of an alternating current motor which restrain and remove a current offset by detecting the current offset in an operating condition of the alternating current motor that performs a phase control of a voltage and by controlling a voltage waveform.

### SUMMARY

According to an aspect of this disclosure, a control device of an alternating current motor, the alternating current motor serving as a control target of the control device and controlling a voltage waveform in view of an offset value of a current of each phase, the alternating current motor including a current detecting portion detecting the current of each phase flowing in a case where a voltage is applied to an armature coil of a stator and a phase detecting portion detecting a rotation phase of a rotor, the control device includes a voltage phase setting portion specifying a voltage phase to apply the voltage at the rotation phase of the rotor based on a torque command value from an outside of the control device, an offset detecting portion detecting the offset value from the current of each phase detected by the current detecting portion, a switching controlling portion obtaining a timing at which the voltage waveform of the voltage applied to the armature coil is switched between a pulse width modulation waveform and a square waveform per half cycle of an electric angle that is obtained from the rotation phase of the rotor detected by the phase detecting portion, and a waveform switching portion switching the voltage waveform to the pulse width modulation waveform on a positive side and the square waveform on a negative side in a case where the offset value detected by the offset detecting portion is a positive value, switching the voltage waveform to the pulse width modulation waveform on the negative side and the square waveform on the positive side in a case where the offset value detected by the offset detecting portion is a negative value, and switching the voltage waveform to the square waveform on the positive side and the square waveform on the negative side in a case where the offset value detected by the offset detecting portion is zero.

Accordingly, the voltage phase is specified on a basis of the torque command value from the outside of the control device. The offset value is detected from the current of each phase. The voltage waveform is switched to the pulse width modulation waveform or the square waveform per half cycle of the electric angle. Then, the voltage waveform is selectively controlled on a basis of whether the offset value is a positive value, a negative value, or zero. That is, in a case where a current offset (the offset value) occurs, the pulse width modulation waveform having the same polarity of that of the offset value and the square waveform having a different polarity from that of the offset value are alternately switched. Consequently, the voltage waveform is intentionally made uneven between the positive side and the negative side to thereby restrain or eliminate the current offset.

The control device further includes a voltage amplitude setting portion specifying a voltage amplitude of a sine waveform of which a frequency and the voltage amplitude are variable, and a pulse width modulation portion generating the pulse width modulation waveform by an on-off control based on a magnitude comparison between the sine waveform and a carrier waveform in a triangular wave having a predetermined voltage amplitude and a predetermined frequency.

Accordingly, the pulse width modulation waveform is generated by the on-off control based on the magnitude comparison between the carrier waveform having the predetermined voltage amplitude and the predetermined frequency and the sine waveform having the variable frequency and voltage amplitude. An ON time period of the pulse modulation is controlled to thereby appropriately control an effective value of the pulse width modulation waveform. Thus, a proportion of unevenness between the positive side and the negative side of the voltage waveform is variably specified on a basis of the positive/negative of the offset value (the current offset) and the magnitude of the offset value. The current offset may be accurately eliminated.

The voltage amplitude setting portion specifies the voltage amplitude of the sine waveform to decrease in association with an increase of the offset value, and specifies the voltage amplitude of the sine waveform to increase in association with a decrease of the offset value, and wherein the pulse width modulation portion specifies a time period in which the sine waveform exceeds the carrier waveform to be an ON time period of a pulse modulation.

Accordingly, the voltage amplitude of the sine waveform decreases in association with the increase of the offset value to thereby decrease the ON time period. Thus, the effective value of the pulse width modulation waveform having the same polarity of the offset value (the current offset) decreases. On the other hand, an effective value of the square waveform having the different polarity from the offset value is constant. Therefore, the proportion of unevenness between the positive side and the negative side of the voltage waveform is enlarged to thereby accurately eliminate the large offset value. In addition, the voltage amplitude of the sine waveform increases so as to increase the ON time period in association with the decrease of the offset value. Thus, the effective value of the pulse width modulation waveform having the same polarity of the offset value approaches the effective value of the square waveform having the different polarity from the offset value. Therefore, the proportion of unevenness between the positive side and the negative side of the voltage waveform decreases to thereby accurately eliminate the small offset value.

The voltage amplitude setting portion holds a relationship between the offset value and the voltage amplitude of the sine waveform beforehand.

Accordingly, the voltage amplitude of the sine waveform is immediately obtained on a basis of the detected offset value, which may lead to a simple control.

The voltage amplitude setting portion performs a feedback control of the voltage amplitude of the sine waveform based on a magnitude of the offset value.

Accordingly, the voltage amplitude of the sine waveform is appropriately specified by the feedback control to thereby securely restrain the current offset. The current offset (the offset value) may be zero in a substantially constant operation condition.

The control device further includes a torque detecting portion detecting an output torque, wherein the voltage phase setting portion specifies the voltage phase by the feedback control based on the torque command value and the output torque detected by the torque detecting portion.

Accordingly, in addition to the elimination of the current offset, the feedback control of the output torque may achieve a further highly accurate control, which leads to an improved operation of the alternating current motor.

According to another aspect of this disclosure, a control method of an alternating current motor, the alternating current motor serving as a control target of the control device and controlling a voltage waveform in view of an offset value of a current of each phase, the alternating current motor including a current detecting portion detecting the current of each phase flowing in a case where a voltage is applied to an armature coil of a stator and a phase detecting portion detecting a rotation phase of a rotor, the control method includes a voltage phase setting step specifying a voltage phase to apply the voltage at the rotation phase of the rotor based on a torque command value from an outside of the control device, an offset detecting step detecting the offset value from the current of each phase detected by the current detecting portion, a switching controlling step obtaining a timing at which the voltage waveform of the voltage applied to the armature coil is switched between a pulse width modulation waveform and a square waveform per half cycle of an electric angle that is obtained from the rotation phase of the rotor detected by the phase detecting portion, and a waveform switching step switching the voltage waveform to the pulse width modulation waveform on a positive side and the square waveform on a negative side in a case where the offset value detected by the offset detecting step is a positive value, switching the voltage waveform to the pulse width modulation waveform on the negative side and the square waveform on the positive side in a case where the offset value detected by the offset detecting step is a negative value, and switching the voltage waveform to the square waveform on the positive side and the square waveform on the negative side in a case where the offset value detected by the offset detecting step is zero.

Accordingly, the voltage phase is specified on a basis of the torque command value from the outside of the control device. The offset value is detected from the current of each phase. The voltage waveform is switched to the pulse width modulation waveform or the square waveform per half cycle of the electric angle. Then, the voltage waveform is selectively controlled on a basis of whether the offset value is a positive value, a negative value, or zero. That is, in a case where a current offset (the offset value) occurs, the pulse width modulation waveform having the same polarity of that of the offset value and the square waveform having a different polarity from that of the offset value are alternately switched. Consequently, the voltage waveform is intentionally made uneven between the positive side and the negative side to thereby restrain or eliminate the current offset.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram illustrating an entire configuration including a control device of an alternating current motor and the alternating current motor serving as a control target of the control device according to an embodiment disclosed here;

Fig. 2 is a block diagram explaining function means of the control device according to the embodiment;

Fig. 3 is a diagram schematically explaining a method for detecting an offset value in an electric current by an offset detecting means;

Fig. 4 is a flowchart illustrating a flow of a voltage control process performed by the control device according to the embodiment;

Figs. 5A and 5B are diagrams schematically explaining an operation of the control device in a case where the offset value is large, Fig. 5A illustrating a square waveform and a carrier waveform within a PWM means and Fig. 5B illustrating a waveform of a control signal instructed by a waveform switching means;

Figs. 6A and 6B are diagrams schematically explaining the operation of the control device in the same way as Figs. 5A and 5B in a case where the offset value is medium;

Figs. 7A and 7B are diagrams schematically explaining the operation of the control device in the same way as Figs. 5A and 5B in a case where the offset value is small; and

Fig. 8 is a bock diagram explaining a function means of a control device according to another embodiment disclosed here.

### DETAILED DESCRIPTION

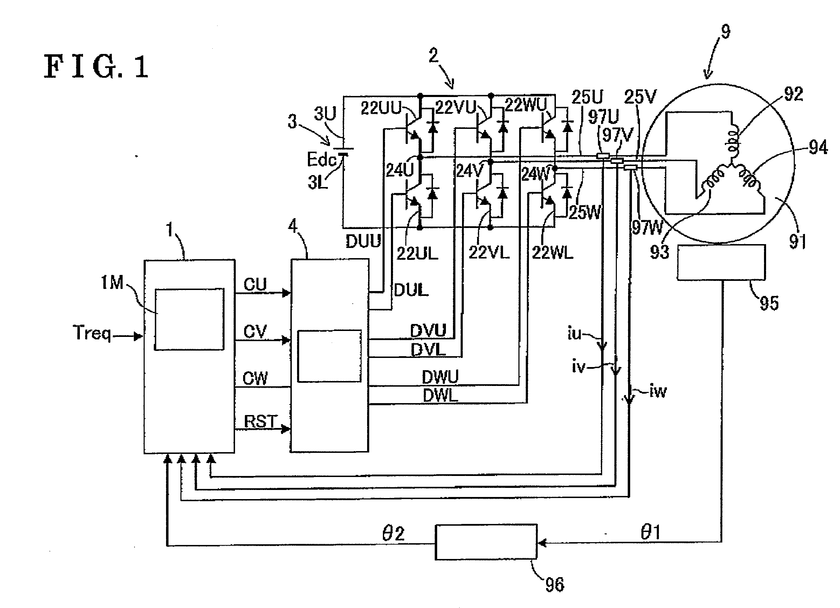

A control device of an alternating current motor according to an embodiment will be explained with reference to Figs. 1 to 7. Fig. 1 illustrates a control device 1 and an alternating current motor (an AC motor) 9 serving as a control target of the control device 1. An inverter circuit 2, a direct-current power source (a DC power source) 3, and a driver circuit 4 are combined to be used as a driving source of the AC motor 9. The control device 1 transmits control signals CU, CV, and CW to the driver circuit 4 and drives the inverter circuit 2 to thereby conclusively control the AC motor 9.

As illustrated in Fig. 1, the AC motor 9 basically includes a stator 91 having three-phase armature coils 92, 93, and 94 connected in a Y-connection, and a rotor with a pole pair. According to the embodiment, number of poles of each of the armature coils 92, 93, and 94, and the number of pole pairs of the rotor are not specifically defined. A phase sensor 95 is provided so as to serve as a phase detecting portion detecting a rotation phase of the rotor. A detection method of the phase sensor 95 is not specifically defined. For example, a resolver is used as the phase sensor 95. A phase detection signal θ1 detected by the phase sensor 95 is transmitted to a phase processing device 96 and is then converted by a signal conversion to a phase detection signal θ2 that is obtainable by the control device 1.

The inverter circuit 2 converts a waveform of a DC voltage Edc of the DC power source 3 into a pulse width modulation waveform (i.e., a PWM waveform, hereinafter the pulse width modulation will be referred to as PWM) or a square waveform so as to perform a phase control and output the resulting pulse width modulation waveform or square waveform. As illustrated in Fig. 1, the inverter circuit 2 is constituted by a three-phase bridge circuit. That is, a U-phase positive side switching element 22UU and a U-phase negative side switching element 22UL (here, the first alphabet U, V, or W arranged next to each reference numeral indicates a U, V, or W phase and the second alphabet U or L indicates the positive side or the negative side) are arranged in series between a positive terminal 3U and a negative terminal 3L of the DC power source 3. A U-phase output terminal 24U is arranged between the switching elements 22UU and 22UL. In the same manner, a V-phase output terminal 24V is arranged between a V-phase positive side switching element 22VU and a V-phase negative side switching element 22VL. Further, a W-phase output terminal 24W is arranged between a W-phase positive side switching element 22WU and a W-phase negative side switching element 22WL. For example, a field effect transistor (FET) is used as each of the six switching elements 22UU, 22UL, 22VU, 22VL, 22WU, and 22WL (which will be hereinafter referred to as the switching elements 22UU to 22WL when collectively described). The six switching elements 22UU to 22WL are individually switchable between a conduction state and a cutoff state by energization control signals DUU, DUL, DVU, DVL, DWU, and DWL (which will be hereinafter referred to as energization control signals DUU to DWL when collectively described).

The output terminals 24U, 24V, and 24W of the three phases, i.e., the U-phase, V-phase, and W-phase, of the inverter circuit 2 are connected to ends of the three-phase armature coils 92, 93, and 94 of the stator 91 via power cables 25U, 25V, and 25W respectively. Current sensors 97U, 97V, and 97W each serving as a current detecting portion are provided at portions of the power cables 25U, 25V, and 25W. A line current detected by each of the current sensors 97U, 97V, and 97W is equal to a phase current of each of the corresponding armature coils 92, 93, and 94. A detection method of each of the current sensors 97U, 97V, and 97W is not specifically defined. For example, a sensor using a shunt resistance or a sensor using a Hall effect may be used as each of the current sensors 97U, 97V, and 97W. Current detection signals iu, iv, and iw of the current sensors 97U, 97V, and 97W are transmitted to the control device 1.

The control device 1 including a microcomputer 1M is operated by software so as to perform a control logic. The control device 1 acquires the phase detection signal θ2 from the phase processing device 96 at a predetermined sampling interval T1. The phase detection signal θ2 is converted to an electric angle θe within the control device 1. Further, the control device 1 obtains a rotation speed of the rotor by dividing a change of the electric angle θe from a previous value by the sampling interval T1 so as to calculate a rotation number N of the rotor. In addition, the control device 1 obtains the three-phase current detection signals iu, iv, and iw from the current sensors 97U, 97V, and 97W at the sampling interval T1. Further, the control device 1 receives a torque command value Treq serving as an operation command value from an outside of the control device 1.

The control device 1 generates the control signals CU, CV, and CW and transmits them to the driver circuit 4 based on the torque command value Treq and in view of the electric angle θe and offset values IUO, IVO, and IWO of the electric currents of the three phases (i.e., current offset). Each of the control signals CU, CV, and CW controls a switching timing of each of the switching elements 22UU to 22WL between an on state and an off state. The control device 1 includes a function to reset the driver circuit 4 by means of a reset signal RST.

The driver circuit 4 converts the control signals CU, CV, and CW received from the control device 1 to the energization control signals DUU to DWL so as to transmit them to the switching elements 22UU to 22WL. Accordingly, each of the switching elements 22UU to 22WL is controlled to open or close so that a time period in which the DC voltage Edc of the DC power source 3 is applied to each of the armature coils 92, 93, and 94 is controlled. The voltage applied to each of the armature coils 92, 93, and 94 is in the form of the PWM waveform or the square waveform. An effective value of the PWM waveform is smaller than an effective value of the square waveform. In addition, each of the armature coils 92, 93, and 94 includes an inductance and therefore the waveform of the current flowing through each of the armature coils 92, 93, and 94 substantially forms a sine wave.

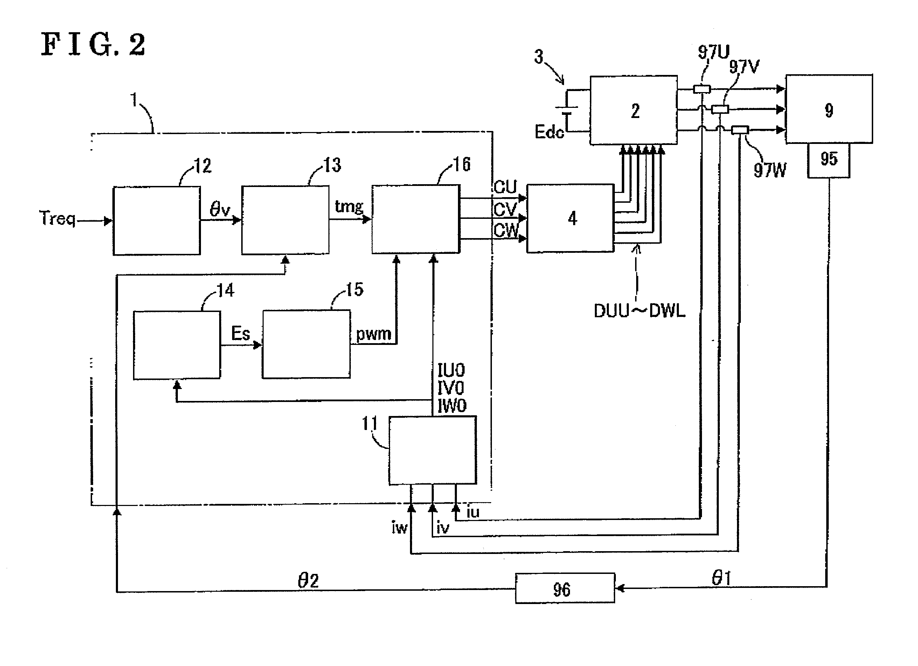

Next, function means of the control device 1 will be explained. As illustrated in Fig. 2, the control device 1 includes an offset detecting means 11 serving as an offset detecting portion and an offset detecting step, a voltage phase setting means 12 serving as a voltage phase setting portion and a voltage phase setting step, a switching controlling means 13 serving as a switching controlling portion and a switching controlling step, a voltage amplitude setting means 14 serving as a voltage amplitude setting portion, a pulse width modulation means (PWM means) 15 serving as a pulse width modulation portion, and a waveform switching means 16 serving as a waveform switching portion and a waveform switching step.

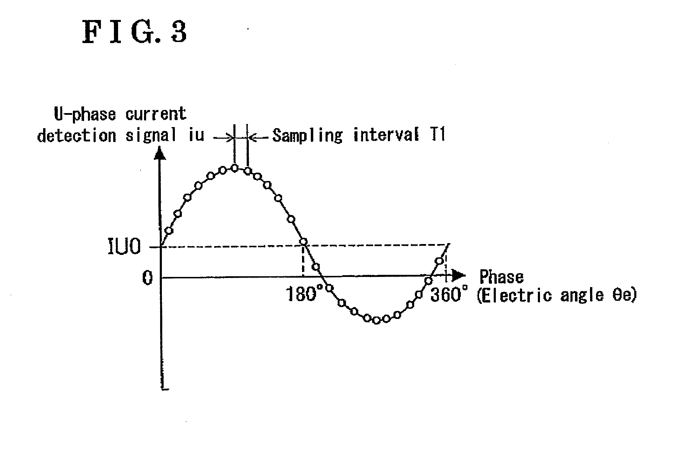

The offset detecting means 11 detects the offset values IUO, IVO, and IWO of the electric currents of the U-phase, the V-phase, and the W-phase from the current detection signals iu, iv, and iw of the three phases obtained by the current sensors 97U, 97V, and 97W, respectively. Fig. 3 schematically illustrates a detection method of the offset detecting means 11 for detecting the offset value IUO of the current of the U-phase. Because the detection method of the offset detecting means 11 is the same among the three phases, the detection of the offset value IUO of the U-phase will be explained as an example. The horizontal axis in Fig. 3 indicates the rotation phase of the rotor, i.e., the electric angle θe, while the vertical axis indicates the current detection signal iu of the U-phase. The solid line in Fig. 3 indicates a U-phase current waveform actually obtained at the armature coil 92. White circles in Fig. 3 indicate discrete instantaneous values obtained at every sampling interval T1.

The offset detecting means 11 obtains a sum of the instantaneous values indicated by the white circles over one cycle of the electric angle θe. Then, the offset detecting means 11 obtains the U-phase offset value IUO by an average value calculation where the sum of the instantaneous values is divided by the sampling numbers. As mentioned above, the current waveform substantially forms a sine wave. Thus, in a case where no current offset exists, a half of the instantaneous values during one cycle of the electric angle θe are positive values while another half of the instantaneous values are negative values, which may lead to a zero value of the sum of the instantaneous values during one cycle of the electric angle θe. On the other hand, in a case where the current offset exists, each of the instantaneous values shifts by the amount of the current offset (the offset value). Thus, the sum of the instantaneous values corresponds to a value obtained by multiplying the sampling numbers by the offset value. Then, the U-phase offset value IUO is obtained on a basis of the aforementioned average value calculation. Fig. 3 illustrates an example where the offset value IUO on the positive side occurs. The offset detecting means 11 transmits the detected offset values IUO, IVO, and IWO of the three phases to the voltage amplitude setting means 14 and the waveform switching means 16.

The voltage phase setting means 12 specifies a voltage phase θv, at which the voltage is applied, on the rotation phase of the rotor indicated by the electric angle θe, i.e., specifies the voltage phase θv to apply the voltage at the rotation phase of the rotor, on a basis of the torque command value Treq from the outside of the control device 1. The voltage phase θv may be specified on a basis of the rotation number N in addition to the torque command value Treq. For practical purpose, the voltage phase θv may be calculated on a basis of a known d-q coordinate transformation. In addition, the voltage phase θv may be obtained from a list-style map where the torque command value Treq and the rotation number N serve as parameters. The voltage phase setting means 12 transmits the obtained voltage phase θv to the switching controlling means 13.

The switching controlling means 13 obtains timing at which the voltage waveform is switched to the PWM waveform or the square waveform per half cycle of the electric angle θe acquired from the rotation phase θ1 of the rotor detected by the phase sensor 95. That is, the switching controlling means 13 compares the electric angle θe presently detected and the voltage phase θv acquired by the voltage phase setting means 12 so as to specify a control timing tmg at which the voltage of each of the U-phase, the V-phase and the W-phase is switched between the positive side and the negative side while the switching timings of the U-phase, the V-phase and the W-phase are sequentially delayed by 120 degrees in order. The control timing tmg is obtained two times for each of the U-phase, the V-phase, and the W-phase during one cycle of the electric angle θe. The switching controlling means 13 transmits the control timing tmg to the waveform switching means 16.

The voltage amplitude setting means 14 specifies a voltage amplitude Es of a sine waveform sin of which frequency and voltage amplitude are variable. In a case where the offset value IUO, IVO, or IWO (specifically, an absolute value of the offset value) is large, the voltage amplitude setting means 14 specifies the voltage amplitude Es of the sine waveform sin used for controlling the corresponding phase to be small. In a case where the offset value IUO, IVO, or IWO is small, the voltage amplitude setting means 14 specifies the voltage amplitude Es of the sine waveform sin used for controlling the corresponding phase to be large. In a case where the offset value IUO, IVO, or IWO is zero, the voltage amplitude setting means 14 specifies the voltage amplitude Es of the sine waveform sin to be infinitely enlarged. In this case, practically, the voltage amplitude Es is saturated at an upper level in view of performance of the control device 1. The voltage amplitude Es of the sine waveform sin may be a different value according to each phase, i.e., voltage amplitudes UEs, VEs, and WEs for the U-phase, the V-phase, and the W-phase. The voltage amplitude setting means 14 transmits the specified voltage amplitude Es to the PWM means 15.

The voltage amplitude setting means 14 according to the embodiment performs a feedback control on the voltage amplitude Es of the sine waveform sin based on the magnitude of each of the offset values IUO, IVO, and IWO. Alternatively, the voltage amplitude setting means 14 may hold a relationship between the voltage amplitude Es and the offset values IUO, IVO, and IWO beforehand so as to specify the voltage amplitude Es based on the aforementioned relationship.

The control device 1 includes a function to specify a frequency fs of the sine waveform sin, though the function is not necessarily performed by the voltage amplitude setting means 14. In a case where the control device 1 receives a rotation number command value to control the rotation number of the rotor, the control device 1 specifies the frequency fs based on the rotation number command value. In addition, in a case where the control device 1 is inhibited from including a function to control the rotation number, the control device 1 specifies the frequency fs so as to maintain the rotation number N presently detected.

The PWM means 15 generates a PWM waveform pwm by an on-off control based on a magnitude comparison between the sine waveform sin and a carrier waveform Cr in a triangular wave having a predetermined voltage amplitude and a predetermined frequency. Specifically, the PWM means 15 generates the sine waveform sin having the voltage amplitude Es and the frequency fs by a sine wave generating circuit. In addition, the PWM means 15 generates the carrier waveform Cr in an isosceles triangular wave having a constant frequency and a constant voltage amplitude by a carrier wave generating circuit. The carrier waveform Cr is not limited to be formed in the isosceles triangular wave. Inclinations of rising and falling of the carrier waveform Cr may be different from each other.

The PWM means 15 compares the magnitude between the carrier waveform Cr and the sine waveform sin by a comparator circuit. A time period during which the sine waveform sin exceeds the carrier waveform Cr is defined to be an ON time period Ton. A time period during which the sine waveform sin is inhibited from exceeding the carrier waveform Cr is specified to be an OFF time period Toff. Accordingly, the PWM means 15 generates a binary signal waveform where the on-time Ton and the off-time Toff are alternately generated, i.e., generates the PWM waveform pwm. The PWM means 15 transmits the PWM waveform pwm to the waveform switching means 16.

The waveform switching means 16 receives the offset values IUO, IVO, and IWO of the three phases from the offset detecting means 11, the control timing tmg from the switching controlling means 13, and the PWM waveform pwm from the PWM means 15. The waveform switching means 16 switches the voltage waveform of each of the three phases to the PWM waveform pwm or a square waveform sqr per half cycle of the electric angle θe on the positive side or the negative side at the predetermined control timing tmg based on whether each of the offset values IUO, IVO, and IWO of the three phases is positive, negative, or zero. That is, the waveform switching means 16 switches the voltage waveform to the PWM waveform pwm on the positive side (i.e., the positive PWM waveform pwm) and the square waveform sqr on the negative side (i.e., the negative square waveform sqr) in a case where the offset value is positive. In addition, the waveform switching means 16 switches the voltage waveform to the PWM waveform pwm on the negative side (i.e., the negative PWM waveform pwm) and the square waveform sqr on the positive side (the positive square waveform sqr) in a case where the offset value is negative. Further, the waveform switching means 16 switches the voltage waveform to the positive square waveform sqr and the negative square waveform sqr in a case where the offset value is zero.

As mentioned above, the voltage waveform of each of the three phases is switched per half cycle of the electric angle θe on the positive side or the negative side so as to generate the control signals CU, CV, and CW of the three phases. The waveform switching means 16 instructs the control signals CU, CV, and CW to the driver circuit 4.

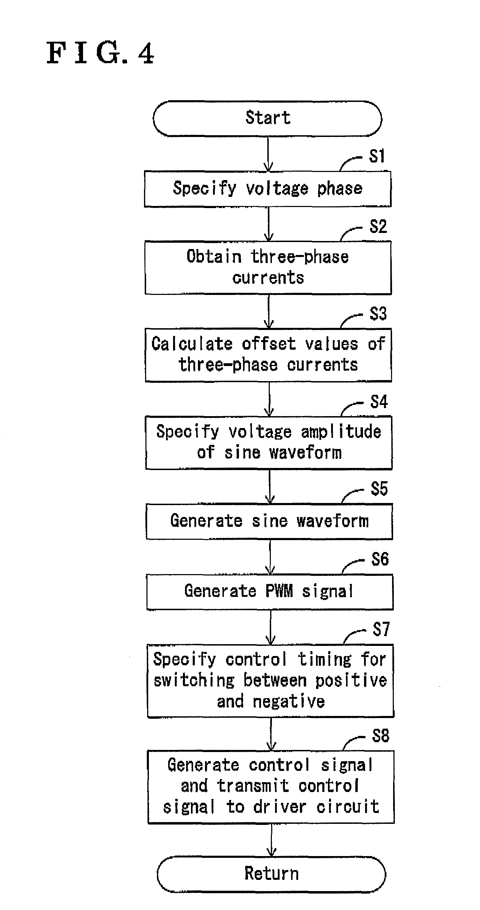

Next, a flow of a voltage control process performed by the control device 1 of the present embodiment will be explained with reference to a flowchart illustrated in Fig. 4. The flow in Fig. 4 is continuously performed during the operation of the AC motor 9. In step S1 in Fig. 4, the voltage phase setting means 12 specifies the voltage phase θv. Next in step S2, the offset detecting means 11 obtains the current detection signals iu, iv, and iw from the current sensors 97U, 97V, and 97W (i.e., obtains three-phase currents). In step S3, the offset detecting means 11 calculates the offset values IUO, IVO, and IWO of the three-phase currents.

In step S4, the voltage amplitude setting means 14 specifies the voltage amplitude Es of the sine waveform sin of each of the three phases. In step S5, the PWM means 15 generates the sine waveform sin having the voltage amplitude Es by the sine wave generating circuit. In step S6, the PWM means 15 compares the magnitude between the carrier waveform Cr and the sine waveform sin by the comparator circuit to generate the PWM waveform pwm.

In step S7, the switching controlling means 13 compares the electric angle θe presently detected and the voltage phase θv to thereby specify the control timing tmg for switching the voltage of each phase between the positive side and the negative side. In step S8, the waveform switching means 16 generates the control signals CU, CV, and CW of the U, V, and W phases depending on whether each of the offset values IUO, IVO, and IWO is the positive value, the negative value, or the zero value so as to transmit the control signals CU, CV, and CW to the driver circuit 4. The driver circuit 4 transmits the energization control signals DUU to DWL to the inverter circuit 2 so that the voltage waveform applied to the AC motor 9 from the inverter circuit 2 is controlled. Accordingly, one cycle of the flow of the voltage control process is terminated and thereafter repeated.

The operation of the control device 1 of the alternating current motor according to the embodiment will be explained.

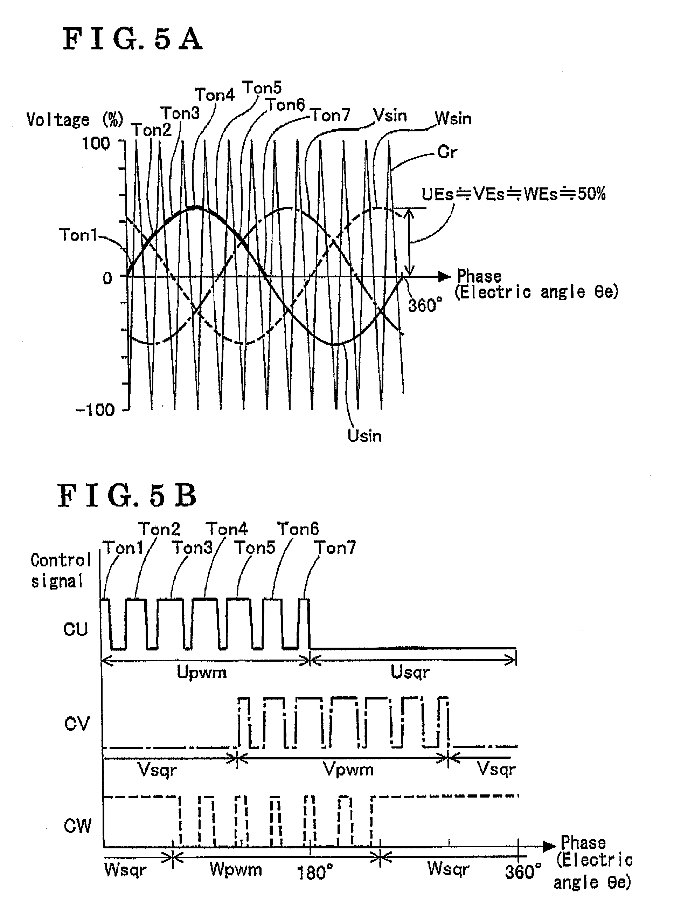

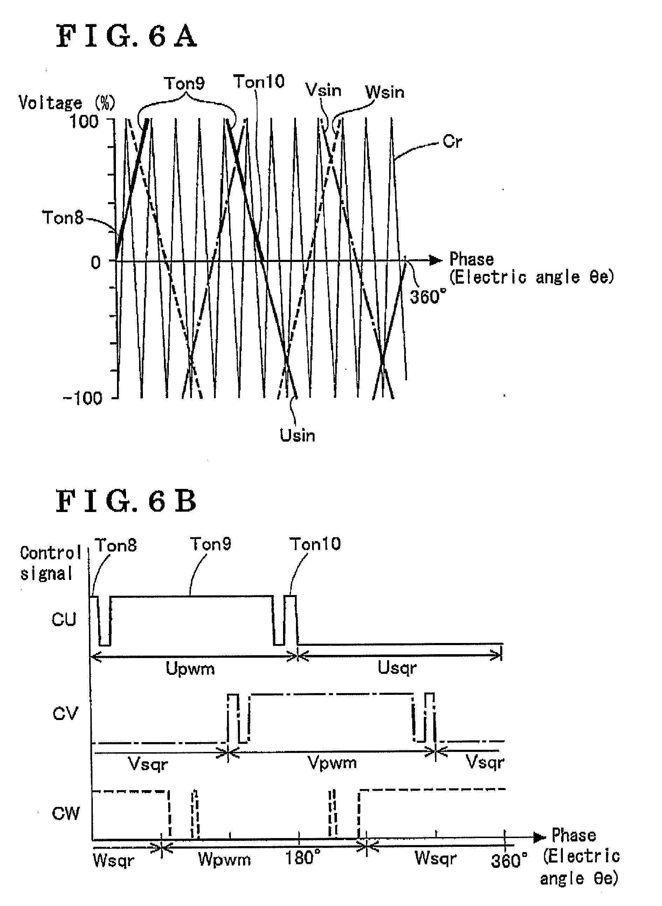

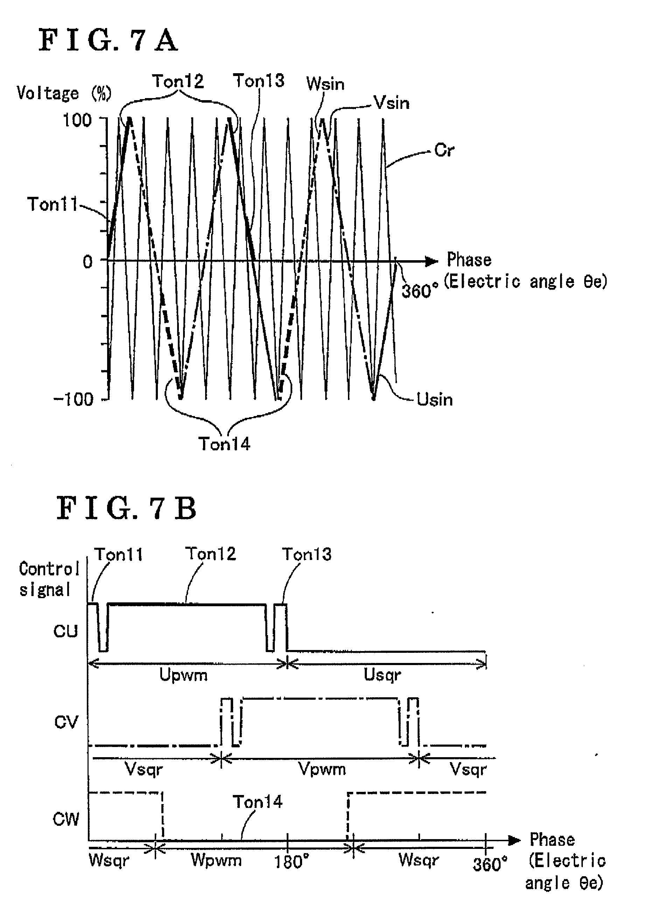

In Fig. 5A, the horizontal axis indicates the phase, i.e., the electric angle θe, while the vertical axis indicates the voltage in a state where the voltage amplitude of the carrier waveform Cr is defined to be 100%. In Fig. 5A, the sine waveforms sin of the U-phase, the V-phase, and the W-phase, i.e., sine waveforms Usin, Vsin, and Wsin, are indicated by a solid line, an alternate long and short dash line, and a broken line respectively. In addition, the carrier waveform Cr is indicated by a thin solid line. In Fig. 5B, the horizontal axis indicates the phase, i.e., the electric angle θe, while the vertical axis indicates an on/off state of each of the control signals CU, CV, and CW of the U-phase, the V-phase, and the W-phase. The aforementioned indications of the horizontal axis and the vertical axis in Figs. 5A and 5B are also applied to Figs. 6A, 6B, and Figs. 7A, 7B.

Figs. 5A and 5B illustrate a case where the offset value is large. Specifically, the U-phase offset value IUO and the V-phase offset value IVO are substantially equally large positive values while the W-phase offset value IWO is a negative value of which an absolute value is equally large to an absolute value of each of the U-phase offset value IUO and the V-phase offset value IVO. According to the embodiment, the voltage amplitude Es of the sine waveform sin is specified to decrease in association with an increase of the offset value. In Figs. 5A and 5B, each of the voltage amplitudes UEs, VEs, and WEs of the sine waveforms Usin, Vsin, and Wsin is specified to be substantially 50% of the carrier waveform Cr.

A method to generate the U-phase control signal CU will be explained below as an example. In Fig. 5A, seven discrete time periods in which the positive half-wave of the U-phase sine waveform Usin exceeds the carrier waveform Cr are specified to be ON time periods Ton1, Ton2, Ton3, Ton4, Ton5, Ton6, and Ton7 respectively as indicated by bold lines. In addition, a time period in which the U-phase sine waveform Usin is inhibited from exceeding the carrier waveform Cr is specified to be the OFF time period Toff. A U-phase PWM waveform Upwm for indicating a switching between the ON time periods Ton1 to Ton7 and the OFF time period Toff is reflected to the U-phase control signal CU.

Because the U-phase offset value IUO is the positive value, the control device 1 changes the voltage waveform to the positive U-phase PWM waveform Upwm and a negative U-phase square waveform Usqr to thereby generate the U-phase control signal CU as illustrated in Fig. 5B. The U-phase control signal CU forms the positive U-phase PWM waveform Upwm in the positive half cycle from 0 degrees to 180 degrees of the electric angle θe (the phase), and therefore a switching control timing between the ON time periods Ton1 to Ton7 and the OFF time period Toff is reflected. In addition, the U-phase control signal CU is switched to form the negative U-phase square waveform Usqr in the negative half cycle from 180 degrees to 360 degrees of the electric angle θe so as to be constantly in an ON state.

Accordingly, the U-phase voltage waveform is intentionally greatly uneven between the positive side and the negative side. The voltage effective value of the U-phase (U-phase voltage effective value) is large on the negative side and is small on the positive side. Accordingly, the large positive U-phase offset value IUO is eliminated.

In addition, because the V-phase offset value IVO is the positive value of which the magnitude is substantially the same as the U-phase offset value IUO, the waveform of the V-phase control signal CV is substantially achieved by delaying the waveform of the U-phase control signal CU by 120 degrees. That is, the V-phase control signal CV forms a positive V-phase PWM waveform Vpwm in the positive half cycle from 120 degrees to 300 degrees of the electric angle θe where the on/off switching control timing is reflected. The V-phase control signal CV forms a negative V-phase square waveform Vsqr in the negative half cycle from 300 degrees to 120 degrees of the electric angle θe so as to be constantly in an ON state. Accordingly, the V-phase voltage waveform is intentionally greatly uneven between the positive side and the negative side. The voltage effective value of the V-phase (V-phase voltage effective value) is large on the negative side and is small on the positive side. Accordingly, the large positive V-phase offset value IVO is eliminated.

According to the W-phase control signal CW, the W-phase offset value IWO is the negative value, which is different from the U-phase control signal CU or the V-phase control signal CV. Thus, the W-phase control signal CW is substantially achieved by reversing the positive side and the negative side of the waveform of the U-phase control signal CU and also delaying the waveform of the U-phase control signal CU by 240 degrees. That is, the W-phase control signal CW forms a positive W-phase square waveform Wsqr in the positive half cycle from 240 degrees to 60 degrees of the electric angle θe so as to be constantly in an ON state. In addition, the W-phase control signal CW forms a negative W-phase PWM waveform Wpwm in the negative half cycle from 60 degrees to 240 degrees of the electric angle θe where the on/off switching control timing is reflected. Accordingly, the W-phase voltage waveform is intentionally greatly uneven between the positive side and the negative side. The voltage effective value of the W-phase (W-phase voltage effective value) is large on the positive side and is small on the negative side. Accordingly, the large negative W-phase offset value IWO is eliminated.

Figs. 6A and 6B illustrate a case where the offset value is medium. Specifically, the U-phase offset value IUO and the V-phase offset value IVO are substantially equally medium positive values while the W-phase offset value IWO is a negative value of which an absolute value is substantially equal to an absolute value of each of the U-phase offset value IUO and the V-phase offset value IVO. According to the present embodiment, the voltage amplitude Es of the sine waveform sin is specified to increase in association with a decrease of the offset value. In Figs. 6A and 6B, the voltage amplitude of each of the sine waveforms Usin, Vsin, and Wsin is specified to be large by exceeding the amplitude of the carrier waveform Cr. Portions of the voltage amplitudes of the sine waveforms Usin, Vsin, and Wsin omitted from Fig. 6A each indicate a saturated state.

In Fig. 6A, three discrete time periods in which the positive half-wave of the U-phase sine waveform Usin exceeds the carrier waveform Cr are specified to be ON time periods Ton8, Ton9 and Ton10 respectively as indicated by bold lines. In addition, a time period in which the U-phase sine waveform Usin is inhibited from exceeding the carrier waveform Cr is specified to be the OFF time period Toff. As compared to Fig. 5A, the sum of the ON time periods Ton8 to Ton10 is greater than the sum of the ON time periods Ton1 to Ton7 because of the large voltage amplitude of the U-phase sine waveform Usin. The U-phase PWM waveform Upwm indicating the switching between the ON time periods Ton8 to Ton10 and the OFF time period Toff is reflected to the U-phase control signal CU.

Because the U-phase offset value IUO is the positive value, the control device 1 changes the voltage waveform to the positive U-phase PWM waveform Upwm and the negative U-phase square waveform Usqr to thereby generate the U-phase control signal CU as illustrated in Fig. 6B. In the same way as Fig. 5B, the U-phase control signal CU forms the positive U-phase PWM waveform Upwm in the positive half cycle from 0 degrees to 180 degrees of the electric angle θe and therefore the switching control timing between the ON time periods Ton8 to Ton10 and the OFF time period Toff is reflected. In addition, the U-phase control signal CU is switched to form the negative U-phase square waveform Usqr in the negative half cycle from 180 degrees to 360 degrees of the electric angle θe so as to be constantly in an ON state.

In addition, the waveform of the V-phase control signal CV is substantially achieved by delaying the waveform of the U-phase control signal CU by 120 degrees. Further, the W-phase control signal CW is substantially achieved by reversing the positive side and the negative side of the waveform of the U-phase control signal CU and also delaying the waveform of the U-phase control signal CU by 240 degrees. As a result, the voltage waveform of each of the three phases is intentionally moderately uneven between the positive side and the negative side. Accordingly, the middle-sized positive and negative offset values IUO, IVO, and IWO are eliminated.

Figs. 7A and 7B illustrate a case where the offset value is small. Specifically, the U-phase offset value IUO and the V-phase offset value IVO are substantially small positive values while the W-phase offset value IWO is a negative value close to zero. According to the present embodiment, the voltage amplitude Es of the sine waveform sin is specified to increase in association with a decrease of the offset value. In Fig. 7A, the voltage amplitude of each of the sine waveforms Usin, Vsin, and Wsin is specified to be further greater than that illustrated in Fig. 6A so that a time period in which the saturation of each of the voltage amplitudes of the sine waveforms Usin, Vsin, and Wsin occurs increases.

In Fig. 7A, three discrete time periods in which the positive half-wave of the U-phase sine waveform Usin exceeds the carrier waveform Cr are specified to be ON time periods Ton11, Ton12 and Ton13 respectively as indicated by bold lines. In addition, a time period in which the U-phase sine waveform Usin is inhibited from exceeding the carrier waveform Cr is specified to be the OFF time period Toff. As compared to Fig. 6A, each of the ON time periods Ton11 to Ton13 is slightly longer than each of the ON time periods Ton8 to Ton10. The U-phase PWM waveform Upwm indicating the switching between the ON time periods Ton11 to Ton13 and the OFF time period Toff is reflected to the U-phase control signal CU.

Because the U-phase offset value IUO is the positive value, the control device 1 changes the voltage waveform to the positive U-phase PWM Upwm and the negative U-phase square waveform Usqr to thereby generate the U-phase control signal CU as illustrated in Fig. 7B. In the same way as Fig. 6B, the U-phase control signal CU forms the positive U-phase PWM waveform Upwm in the positive half cycle from 0 degrees to 180 degrees of the electric angle θe and therefore the switching control timing between the ON time periods Ton11 to Ton13 and the OFF time period Toff is reflected. In addition, the U-phase control signal CU is switched to form the negative U-phase square waveform Usqr in the negative half cycle from 180 degrees to 360 degrees of the electric angle θe so as to be constantly in an ON state.

In addition, the waveform of the V-phase control signal CV is substantially achieved by delaying the waveform of the U-phase control signal CU by 120 degrees.

In Fig. 7A, one time period in which the negative half-wave of the W-phase sine waveform Wsin falls below the carrier waveform Cr is specified to be an ON time period T14 as indicated by a broken bold line. In addition, a time period in which the W-phase sine waveform Wsin is inhibited from falling below the carrier waveform Cr is specified to be the OFF time period Toff. The ON time period Ton14 is a long time period while both edges of the half-wave are only slightly cut off. The W-phase PWM waveform Wpwm indicating the switching between the ON time period Ton14 and the OFF time period Toff is reflected to the W-phase control signal CW.

Because the W-phase offset value IWO is the negative value close to zero, the control device 1 changes the voltage waveform to the positive W-phase square waveform Wsqr and the negative W-phase PWM waveform Wpwm to thereby generate the W-phase control signal CW as illustrated in Fig. 7B. The W-phase control signal CW forms the positive W-phase square waveform Wsqr in the positive half cycle from 240 degrees to 60 degrees of the electric angle θe so as to be constantly in an ON state. The W-phase control signal CW forms the negative W-phase PWM waveform Wpwm in the negative half cycle from 60 degrees to 240 degrees of the electric angle θe where the switching control timing of the ON time period Ton14 is reflected.

Accordingly, the voltage waveform of each of the three phases is intentionally slightly uneven between the positive side and the negative side. The small positive value and negative value of the offset values IUO, IVO, and IWO are eliminated.

Further, in a case where the offset value IUO, IVO, or IWO of one of the phases is zero, the voltage waveform of the phase of which the offset value is zero is changed to the positive or negative square waveform. Such procedure corresponds to a known square waveform control.

Figs. 5 to 7 simply illustrate examples. The voltage amplitudes UEs, VEs, and WEs of the sine waveforms of the three phases are independently specified on a basis of the magnitudes of the offset values IUO, IVO, and IWO of the three phases. In addition, the combination of the PWM waveform pwm and the square waveform sqr of each of the three phases is separately or individually specified on a basis of whether each of the offset values IUO, IVO, and IWO of the phases is on the positive side or the negative side. Further, the waveform and the cycle of the carrier waveform Cr may be changed. For example, in a case where the carrier wave generating circuit, generating the carrier waveform Cr of which the cycle is further shortened, is used, the greater number of ON time periods may be specified as compared to the examples illustrated in Figs. 5 to 7.

According to the control device 1 of the alternating current motor of the embodiment, as explained with reference to Figs. 5 to 7, the PWM waveform pwm having the same polarity as the polarity of each of the offset values IUO, IVO, and IWO and the square waveform sqr having the different polarity from the polarity of each of the offset values IUO, IVO, and IWO are alternatively switched therebetween in a case where the current offset occurs. In addition, the voltage amplitude Es of the sine waveform sin is specified to be small in a case where the current offset is large while the voltage amplitude Es is specified to be large in a case where the current offset is small. The time period in which the sine waveform sin exceeds the carrier waveform Cr is specified to be the ON time Ton. Accordingly, because the voltage waveform is intentionally greatly uneven between the positive side and the negative side and a proportion of such unevenness is controlled on a basis of the magnitude of the current offset, the current offset may be accurately eliminated.

Further, the voltage amplitude Es of the sine waveform sin is feedback controlled on a basis of the magnitude of the current offset. Therefore, the voltage amplitude Es may be optimized by the feedback control so as to securely restrain the current offset. The current offset may be zero in the substantially constant operation condition.

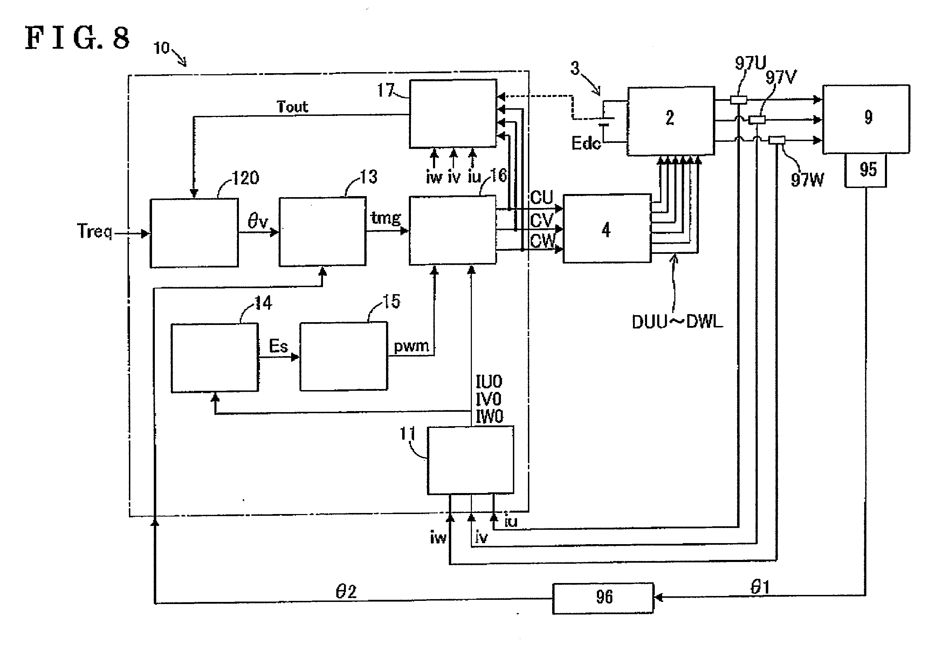

Next, a control device 10 of an alternating current motor according to another embodiment will be explained. The control device 10 of another embodiment includes a torque detecting means 17 serving as a torque detecting portion. As illustrated in Fig. 8, the torque detecting means 17 acquires information of the current detection signals iu, iv, and iw, the control signals CU, CV, and CW, and the direct-current voltage Edc of the DC power source 3. Therefore, the torque detecting means 17 may calculate an effective power that is input to the AC motor 9. In addition, the torque detecting means 17 converts the effective power to an output torque Tout output from the AC motor 9. The torque detecting means 17 transmits the output torque Tout to a voltage phase setting means 120 serving as the voltage phase setting portion and the voltage phase setting step. The voltage phase setting means 120 performs a feedback control so that the output torque Tout is brought to be equalized to the torque command value Treq, thereby specifying the voltage phase θv.

According to the aforementioned another embodiment, in addition to the elimination of the offset values IUO, IVO, and IWO by the feedback control thereon, the feedback control is performed on the output torque Tout, which may lead to a further highly accurate control. The improved operation of the AC motor 9 may be achieved.

Instead of the torque detecting means 17 within the control device 10, a torque sensor may be provided at an output shaft of the AC motor 9. Then, information of the output torque Tout measured by the torque sensor may be acquired by the control device 10.

The function means 11 to 17, 120 of the control device 1, 10 are functioned by the execution of the control logic by the microcomputer 1M. Thus, the aforementioned embodiments may be realized as a control method for performing the function means 11 to 17, 120 as function steps. The aforementioned embodiments may be achieved regardless of the configuration or the connection method of the coil of the AC motor 9, and may be changed or modified in various methods.
A control device (1, 10) of an alternating current motor (9) includes a voltage phase setting portion (12, 120), an offset detecting portion (11), a switching controlling portion (13) obtaining a timing at which a voltage waveform is switched between a pulse width modulation waveform and a square waveform per half cycle of an electric angle, and a waveform switching portion (15) switching the voltage waveform to the pulse width modulation waveform on a positive side and the square waveform on a negative side in a case where the offset value (IUO, IVO, IWO) is a positive value, switching the voltage waveform to the pulse width modulation waveform on the negative side and the square waveform on the positive side in a case where the offset value is a negative value, and switching the voltage waveform to the square waveform on the positive side and the square waveform on the negative side in a case where the offset value is zero.

## Claims

1. A control device (1, 10) of an alternating current motor (9), the alternating current motor (9) serving as a control target of the control device (1, 10) and controlling a voltage waveform in view of an offset value (IUO, IVO, IWO) of a current of each phase, the alternating current motor (9) including a current detecting portion (97U, 97V, 97W) detecting the current of each phase flowing in a case where a voltage is applied to an armature coil (92, 93, 94) of a stator (91) and a phase detecting portion (95) detecting a rotation phase of a rotor, the control device (1, 10) comprising:
a voltage phase setting portion (12, 120) specifying a voltage phase (θv) to apply the voltage at the rotation phase of the rotor based on a torque command value (Treq) from an outside of the control device (1, 10);
an offset detecting portion (11) detecting the offset value (IUO, IVO, IWO) from the current of each phase detected by the current detecting portion (97U, 97V, 97W);
a switching controlling portion (13) obtaining a timing at which the voltage waveform of the voltage applied to the armature coil (92, 93, 94) is switched between a pulse width modulation waveform and a square waveform per half cycle of an electric angle (θe) that is obtained from the rotation phase of the rotor detected by the phase detecting portion (95); and
a waveform switching portion (16) switching the voltage waveform to the pulse width modulation waveform on a positive side and the square waveform on a negative side in a case where the offset value (IUO, IVO, IWO) detected by the offset detecting portion (11) is a positive value, switching the voltage waveform to the pulse width modulation waveform on the negative side and the square waveform on the positive side in a case where the offset value (IUO, IVO, IWO) detected by the offset detecting portion (11) is a negative value, and switching the voltage waveform to the square waveform on the positive side and the square waveform on the negative side in a case where the offset value (IUO, IVO, IWO) detected by the offset detecting portion (11) is zero.

2. The control device (1, 10) according to claim 1, further comprising:
a voltage amplitude setting portion (14) specifying a voltage amplitude (Es) of a sine waveform (sin) of which a frequency (fs) and the voltage amplitude (Es) are variable; and
a pulse width modulation portion (15) generating the pulse width modulation waveform by an on-off control based on a magnitude comparison between the sine waveform (sin) and a carrier waveform (Cr) in a triangular wave having a predetermined voltage amplitude and a predetermined frequency.

3. The control device (1, 10) according to claim 2, wherein the voltage amplitude setting portion (14) specifies the voltage amplitude (Es) of the sine waveform (sin) to decrease in association with an increase of the offset value (IUO, IVO, IWO), and specifies the voltage amplitude (Es) of the sine waveform (sin) to increase in association with a decrease of the offset value (IUO, IVO, IWO), and wherein the pulse width modulation portion (15) specifies a time period in which the sine waveform (sin) exceeds the carrier waveform (Cr) to be an ON time period of a pulse modulation.

4. The control device (1, 10) according to either claim 2 or 3, wherein the voltage amplitude setting portion (14) holds a relationship between the offset value (IUO, IVO, IWO) and the voltage amplitude (Es) of the sine waveform (sin) beforehand.

5. The control device (1, 10) according to either claim 2 or 3, wherein the voltage amplitude setting portion (14) performs a feedback control of the voltage amplitude (Es) of the sine waveform (sin) based on a magnitude of the offset value (IUO, IVO, IWO).

6. The control device (10) according to any one of claims 1 through 5, further comprising a torque detecting portion (17) detecting an output torque (Tout), wherein the voltage phase setting portion (120) specifies the voltage phase (θv) by the feedback control based on the torque command value (Treq) and the output torque (Tout) detected by the torque detecting portion (17).

7. A control method of an alternating current motor (9), the alternating current motor (9) serving as a control target of the control device (1, 10) and controlling a voltage waveform in view of an offset value (IUO, IVO, IWO) of a current of each phase, the alternating current motor (9) including a current detecting portion (97U, 97V, 97W) detecting the current of each phase flowing in a case where a voltage is applied to an armature coil (92, 93, 94) of a stator (91) and a phase detecting portion (95) detecting a rotation phase of a rotor, the control method comprising;
a voltage phase setting step (12, 120) specifying a voltage phase (θv) to apply the voltage at the rotation phase of the rotor based on a torque command value (Treq) from an outside of the control device (1, 10);
an offset detecting step (11) detecting the offset value (IUO, IVO, IWO) from the current of each phase detected by the current detecting portion (97U, 97V, 97W);
a switching controlling step (13) obtaining a timing at which the voltage waveform of the voltage applied to the armature coil (92, 93, 94) is switched between a pulse width modulation waveform and a square waveform per half cycle of an electric angle (θe) that is obtained from the rotation phase of the rotor detected by the phase detecting portion (95); and
a waveform switching step (16) switching the voltage waveform to the pulse width modulation waveform on a positive side and the square waveform on a negative side in a case where the offset value (IUO, IVO, IWO) detected by the offset detecting step (11) is a positive value, switching the voltage waveform to the pulse width modulation waveform on the negative side and the square waveform on the positive side in a case where the offset value (IUO, IVO, IWO) detected by the offset detecting step (11) is a negative value, and switching the voltage waveform to the square waveform on the positive side and the square waveform on the negative side in a case where the offset value (IUO, IVO, IWO) detected by the offset detecting step (11) is zero.
